Europäisches Patentamt

European Patent Office

Office européen des brevets

(19)

(11) Publication number: **0 304 130 B1**

(12) **EUROPEAN PATENT SPECIFICATION**

(45) Date of publication of patent specification :
06.11.91 Bulletin 91/45

(51) Int. Cl.$^5$: **A23D 7/00**

(21) Application number: **88201751.0**

(22) Date of filing : **16.08.88**

(54) Edible fat-containing products.

(30) Priority : 19.08.87 NL 8701952
24.06.88 GB 8815047

(43) Date of publication of application :
22.02.89 Bulletin 89/08

(45) Publication of the grant of the patent :
06.11.91 Bulletin 91/45

(84) Designated Contracting States :
AT BE CH DE ES FR GB GR IT LI NL SE

(56) References cited :
EP-A- 0 091 331
EP-A- 0 236 288
FR-A- 2 254 318
US-A- 3 600 186
US-A- 4 241 054

(73) Proprietor : UNILEVER NV
Burgemeester s'Jacobplein 1 P.O. Box 760
NL-3000 DK Rotterdam (NL)
(84) Designated Contracting States :
BE CH DE ES FR GR IT LI NL SE AT
Proprietor : UNILEVER PLC
Unilever House Blackfriars P.O. Box 68
London EC4P 4BQ (GB)
(84) Designated Contracting States :
GB

(72) Inventor : Cain, Frederick William
Dr. Blookerstraat 12
NL-2271 VL Voorburg (NL)
Inventor : de Jong, Frederik Roelof
van Boisotstraat 31
NL-3132 XK Vlaardingen (NL)

(74) Representative : Mulder, Cornelis Willem
Reinier, Dr. et al
UNILEVER N.V. Patent Division P.O. Box 137
NL-3130 AC Vlaardingen (NL)

EP 0 304 130 B1

Jouve, 18, rue Saint-Denis, 75001 PARIS

## Description

The invention relates to edible fat-containing products comprising indigestible polyol fatty acid polyesters. In particular, the invention relates to edible fat-containing products which are fat-continuous emulsions, such as margarines and low-fat spreads, and which are often referred to under the general name of spreads.

Polyol fatty acid polyesters, and in particular, the sugar fatty acid polyesters, such as e.g. the sucrose fatty acid polyesters, are known as suitable low-calorie fat-replacers in edible products. Substantially indigestible for human beings they have physical and organoleptic properties very similar to triglyceride oils and fats conventionally used in edible products. Polyol fatty acid polyesters are also reported to have use as pharmaceutical agents e.g. in view of their ability to take up fat-soluble substances, such as in particular cholesterol, in the gastro-intestinal tract, and subsequently remove those substances from the human body. Accordingly, it is attractive to replace at least part of the fat in edible fat-containing products by polyol fatty acid polyesters. It is further reported that in food products the use of polyol fatty acid polyesters which are liquid at body temperature, may give rise to the so-called problem of anal leakage.

Edible fat-containing products comprising indigestible polyol fatty acid polyesters are known in the art, and described in eg U.S. Pat. Nos. 3,600,186, 4,005,195, 4,005,196, 4,034,083 and EP Pat. Publ. Nos. 0233856, 0236288, and 0235836.

In this specification, unless otherwise indicated, the term 'fat' refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated or modified otherwise, as well as non-toxic fatty materials having properties similar to triglycerides, which materials may be indigestible, such as for example waxes, e.g. jojoba oil and hydrogenated jojoba oil, and polyol fatty acid polyesters referred to hereinafter in more detail. The terms fat and oil are used interchangeably.

In this specification the term 'polyol' is intended to refer to any aliphatic or aromatic compound which comprises at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alpha-methylglucoside. A generally used and preferred sugar polyol is sucrose.

In this specification the term 'polyol fatty acid polyester' is intended to refer to any such polyesters or mixtures thereof of which, on an average, more than 70% of the polyol hydroxyl groups have been esterified with fatty acids.

In this specification by 'indigestible' is meant that at least about 70% by weight of the material concerned is not digested by the human body.

Edible fat-continuous emulsion products such as margarines and low-fat spreads, have to comply with requirements such as oral response, thermal stability, spreadability, melting behaviour and the like. Often they have to comply with such requirements simultaneously.

For margarines and low-fat spreads which contain relatively large amounts of polyunsaturated components, it can be particularly difficult to simultaneously comply with the requirements of acceptable hardness and spreadibility over the range from ambient to refrigerator temperatures, and acceptable taste properties at mouth temperature.

In our co-pending GB Application No. 8807206 the above problem has been approached by using a specific processing route whereby at least a significant part of hardstock polyol fatty acid polyesters are processed such that crystallization takes place before full mixing with the remaining fat fraction. By this route fat-containing products are obtained having at least two separately crystallised fat-phase fractions and which are characterised by multi-peaked differential scanning calorimetry (DSC) curves showing separate fat peaks at both sides of 36°C.

Although the inclusion of separately crystallised fat fractions leads to very acceptable products, the necessity of unconventional processing, i.e. the processing of the fat-phase in at least two separate streams : llow separate crystallisation, is not always desirable and may even be unacceptable, if not prohibitive, to manufacturing sites using conventional 'single-stream' equipment.

It is therefore an object of the present invention to provide edible fat-containing products, such as in particular spreads, comprising indigestible polyol fatty acid polyesters having acceptable hardness, spreadibility, and taste characteristics and which can be made by conventional processing routes.

It has been found that in the formulation of spreads on the basis of conventional processing the replacement of significant amounts of triglyceride fats by polyol fatty acid polyesters requires a delicate balance in terms of amount and selection of the polyesters to be employed. On the one side major proportions of liquid polyol fatty acid polyesters adversely affect crystallisation behaviour of any further conventional triglyceride fat components and may give rise to an increased risk of anal leakage ; on the other side high amounts of solid polyesters have been found to result in unacceptably hard product consistency and poor taste characteristics if no special processing is used.

It has now been found that without the need of special processing still very good spread products can be formulated if a proper balance is struck between the solids profile of the fat-phase and the contribution thereto by the polyol fatty acid polyesters comprised therein.

Accordingly, the present invention provides edible fat-containing products, such as in particular spread compositions, having a fat-continuous phase comprising one or more indigestible polyol fatty acid polyesters having a slip melting point within the range of 35 to 50°C and conventional glyceride fats in a weight ratio within the range of 20 : 80 to 90 : 10, wherein the fat-continuous phase is single-stream processed and has a solids profile of $N_5$ between 10 and 30, and $N_{35}$ below 2.5, the solids contribution to the $N_5$ from said one or more polyol fatty acid polyesters being in the range of 70 to 100% and the digestible part of the fat composition comprising at most 35% of saturated fatty acid residues.

The edible fat-containing products in accordance with the invention in general have an overall fat content between 10 and 100% by weight.

In a first and preferred aspect of the invention such products are spread compositions. For the purposes of the present invention the term 'spread composition' is intended to refer to any edible fat-containing food composition which is based upon a water-in-oil or oil-in-water-in-oil emulsion, and which comprises of from 10 to 90% by weight of fat-phase. The present invention is equally applicable to margarine-type spreads having a fat content of 65 to 90%, to halvarine-type spreads having a fat content of 35 to 65%, and to low-fat spreads having a fat content of 10 to 35% by weight of the composition.

In an alternative aspect of the invention such products are margarine-like products containing over 95%, in particular, about 98% of fat, such as are used for baking purposes.

For the purposes of the present invention the term 'single-stream processing' is intended to exclude processing of the fat phase in separate fractions to get the two- or more-peaked DSC curve as described in our co-pending GB Application No. 8807206.

A first essential feature of the spread compositions according to the present invention is the solids profile of the fat-continuous phase.

The solids profile, or N-line is a convenient way to define the melting characteristics of a fat or a fat-like substance. The N-line is the graph of $N_t$-values versus the temperature t. The $N_t$-value is measured by the nuclear magnetic relaxation technique and is a direct measure of the level of solid fat content at temperature t. An appropriate procedure is described in Fette, Seifen, Anstrichmittel $\underline{80(5)}$, 180–186 (1978). To some extent N-values of fats and fatty substances are dependent on the temperature history in the preparation of the samples for the N-value measurement. For the purposes of the present invention a suitable preparatory temperature history comprises heating the sample to 80°C, followed by 5 minutes at 60°C and 60 minutes at 0°C, whereafter the sample is held for 30 minutes at the temperature of the N-value measurement, subsequent to which said measurement is immediately carried out.

The solids profile of the fat-continuous phase in the spread compositions according to the present invention is characterized by a $N_5$-value of between 10 and 30, and a $N_{35}$-value of below 2.5. Preferably, the profile is further characterized by a $N_{20}$-value of between 6 and 15. Most preferred are solids profiles having $N_5$ between 13 and 25, $N_{20}$ between 8 and 13, and $N_{35}$ below 1.5. It will be clear that these solids profiles relate to the overall fat-continous phase and accordingly, to the combined and not to single components therein.

In general the fat-continuous phase will be a mixture of one or more polyol fatty acid polyesters and conventional glyceride fats. Preferably, the weight ratio in the fat-continuous phase between the polyesters and the conventional fat lies in the range of from 30 : 70 to 60 : 40.

A further essential feature of the present invention is that the polyol fatty acid polyesters should contribute to the solids profile to such extent that the $N_5$ is for at least 25% due to solids from polyol fatty acid polyester, and accordingly ; for a maximum of 75% due to the conventional glyceride fat.

In those instances where there are solids contributions to a particular N-value from several sources, i.e. from both one or more polyol fatty acid polyesters and one or more conventional glyceride fats, the split between such contributions is not easily measured. For the purposes of the present invention the solids contribution from the polyester component to the overall $N_t$-value is taken to be the $N_t$-value of a composition consisting of the same amount of that polyester component in sunflower oil.

The polyol fatty acid polyesters which may suitably be used in the present invention, have been defined in general chemical terms hereinbefore. Preferably, polyol fatty acid polyesters derived from sugars or sugar alcohols are applied, and in particular, sugar fatty acid polyesters derived from disaccharides, such as sucrose.

The polyol fatty acid polyesters should be selected within the framework of the required solids profile of the fat-continuous phase and the contribution thereto from the polyesters as defined before. To a considerable extent such a selection must take into account the relative proportion of the polyesters with respect to the conventional fat components and the solids profile thereby already introduced. In the preferred embodiment where the conventional fat component is fully liquid even at 5°C, such as e.g. in the case of sunflower oil, the selection of polyol fatty acid polyester is fully based upon the required solids profile of the overall fat-continuous phase.

In general fatty acids per se or naturally occurring fats and oils may be used as source for the fatty acid residues in the polyol fatty acid polyesters. Conventional techniques may be used to introduce, if necessary, the required solids profile. Suitable such techniques include full or partial hydrogenation, interesterification, transesterification and fractionation, and may be used before or after conversion of the polyols to polyol fatty acid polyesters. Suitable sources of the fatty acid residues are vegetable oils and fats, such as in particular soybean oil, (part of) which is modified to provide the resulting polyol fatty acid polyester with the required solids profile.

It will be clear that in general the polyol fatty acid polyester suitable for inclusion in the fat-continuous phase of the present compositions may consist of both solids and liquid at the range of from refrigerator to mouth temperatures. It may therefore be of advantage to obtain high-melting and low-melting fat fractions (i.e. fractions having high solids and low solids profiles) by fractionating a single fat blend, such as partially hardened soybean oil or a sugar polyester blend comprising both solid and liquid fractions, and use the high-melting and low-melting fractions separately to accurately arrive at the required overall solids profile of the fat-continuous phase.

Polyol fatty acid polyesters suitably contributing to the required solids profile preferably have a slip melting point within the range of from 35 to 42°C.

In a preferred aspect of the invention polyol fatty acid polyesters are used which are completely or partly derived from trans-hydrogenated triglycerides or the corresponding lower alkylesters thereof, as described in EP 0235836. Alternatively, the desired level of trans fatty acid residues may also be introduced by first converting to the polyol fatty acid polyester and subsequent trans-hydrogenation.

As defined hereinbefore polyol fatty acid polyesters may be applied of which, on an average, more than 70% of the polyol hydroxyl groups have been esterified with fatty acids. Preferably polyol fatty acid polyesters are used with higher degrees of conversion, in particular polyol fatty acid polyesters of which, on an average, more than 85% or even over 95% of the polyol hydroxyl groups have been esterified with fatty acids.

As indicated hereinbefore in addition to the polyol fatty acid polyester the products of the invention generally comprise conventional oils and fats which may be of both animal and vegetable origin. Suitable conventional triglyceride fats and oils include, optionally partially hydrogenated, coconut oil, palmkernel oil, palm oil, marine oils, lard, tallow fat, butter fat, soybean oil, safflower oil, cotton seed oil, rapeseed oil, poppy seed oil, corn oil sunflower oil and mixtures thereof. Of these oils sunflower oil is preferred.

It has been well recognised that fat-containing products containing relatively large amounts of digestible polyunsaturated fatty acid residues are attractive for their cholesterol-lowering effect. Such products are in particular those in which the fatty acid residues in the digestible part of the fat composition comprise a maximum of 35% of saturated fatty acid residues. A useful characteristic to scale fat-containing products for their cholesterol-lowering effect is the ratio of polyunsaturated to saturated fatty acid residues (in this context only fatty acid residues in digestible fats are considered). The higher this ratio, the stronger the cholesterol-lowering effect. Since linoleic acid is the most important polyunsaturated fatty acid, instead of the above ratio in practice the ratio of linoleic acid to saturated fatty acid residues (LA/SFA ratio) can be used.

Products in which in particular the conventional saturated fat fraction (i.e. the conventional hardstock) is fully or partially replaced by indigestible polyol fatty acid polyesters, allow an appreciable and desirable increment in the LA/SFA ratio. In the products according to the invention LA/SFA ratios may be achieved of over 5, such as 6 to 8. If so desired, LA/SFA ratios can be achieved of over 10.

Fat-containing products, such as margarines, having a high amount of unsaturated components are of course characterized by the presence of large amounts of liquid oil, which conventionally leads to the problem that it is difficult to have sufficient thermal stability and hardness. The present invention allows products displaying the required hardness without the necessity of a decrease in the amount of unsaturated components, and without a deterioration of the oral response. The amount of polyunsaturated fatty acid residues, such as in particular linoleic acid residues, in the present fat product is preferably between 30 and 80%, in particular at least 40%, or even 50 or 60% by weight of the total amount of digestible fatty acid residues present in the fat phase.

In the products according to the invention conventionally used fat- and water-soluble additives, such as emulsifiers, milk, proteins, preservatives, vitamins, in particular vitamins A, D and E, salt and flavour compounds, may be incorporated.

The spread compositions according to the present invention can be prepared by conventional single-stream processing. The ingredients are premixed and subsequently processed using conventional heat-exchanging/mixing units to mix and work the spread compositions. Suitable mixers for this purpose are well-known. Examples thereof are static mixers and jet mixers. It is also possible to use a cavity transfer mixer, as described in WO-A 8303222.

The invention is now further illustrated with reference to the following examples.

Example 1

A spread composition of good consistency, spreadibility and taste properties was prepared having the following formulation :

| ingredient | % by weight |
|---|---|
| fat phase | 80.0 |
| monoglyceride | 0.1 |
| lecithin | 0.1 |
| salt | 2.3 |
| whey powder | 3.0 |
| minor ingredients | 0.1 |
| water | balance |

The composition of the fat phase was as follows :

5

| ingredient | % by weight of the fat phase |
|---|---|
| partially hardened soybean oil (slip melting point 36°C) | 30.0 |
| sunflower oil | 20.0 |
| sucrose fatty acid polyester (SPE1) (fatty acid residues derived from touch-hardened soybean oil, slip melting point 28°C; degree of esterification over 95 %) | 40.0 |
| sucrose fatty acid polyester (SPE2) (fatty acid residues derived from 55 % fully hardened soybean oil, slip melting point 65°C, and 45 % touch-hardened soybean oil, slip melting point 28°C; degree of esterification over 95 %) | 10.0 |

The spread composition was prepared using the following method. First the monoglyceride emulsifier was dissolved in a mixture of heated SPE2 and the partially hardened soybean oil. Subsequently, the SPE1, the sunflower oil, the lecithin, amd the minor ingredients were mixed in.

Separately, a water phase was prepared from initially boiled water, salt and whey powder, and after cooling down to 40°C, adjusted to a pH of 5.7 with 10% citric acid solution.

The above fat phase was transferred to a jacketed premixing vessel at about 40°C, which was followed by mixing in the water phase. The resulting mixture was stirred for a further 15 minutes and subsequently, processed through a sequence of two A-units and one C-unit, using shaft speeds and exit temperatures of respectively, 600 rpm / 10°C, 500 rpm / 8°C and 150 rpm / 14°C.

The N-values of the resulting product were as follows :

$N_5$ — 23, $N_{20}$ — 13.6 and $N_{35}$ — 0.7.

Example 2

A spread composition of good consistency, spreadibility and taste properties was prepared having the following formulation :

6

| ingredient | % by weight |
|---|---|
| fat phase | 80.0 |
| monoglyceride | 0.1 |
| lecithin | 0.1 |
| salt | 1.8 |
| whey powder | 2.1 |
| minor ingredients | 0.1 |
| water | balance |

The composition of the fat phase was as follows :

| ingredient | % by weight of the fat phase |
|---|---|
| sunflower oil | 75.0 |
| sucrose fatty acid polyester (SPE2) | 25.0 |

The spread composition was prepared and processed essentially as described in example 1, the exit temperature from the C-unit now being 11°C.

The N-values of the resulting product were as follows :

$N_5$ — 20, $N_{20}$ — 9.9 and $N_{35}$ — 1.3.

## Claims

1. Edible fat-containing product having a fat-continuous phase comprising one or more indigestible polyol fatty acid polyesters having a slip melting point within the range of 35 to 50°C and conventional glyceride fats in a weight ratio within the range of 20 : 80 to 90 : 10, wherein the fat-continuous phase is single-stream processed and has a solids profile of $N_5$ between 10 and 30, and $N_{35}$ below 2.5, the solids contribution to the $N_5$ from said one or more polyol fatty acid polyesters being in the range of 50 to 100% and the digestible part of the fat composition comprising at most 35% of saturated fatty acid residues.

2. Product according to claim 1 wherein the fat-continuous phase has a solids profile such that $N_{20}$ is between 6 and 15.

3. Product according to claim 1 or 2 wherein the fat continuous phase has a solids profile of $N_5$ between 13 and 25, $N_{20}$ between 8 and 13, and $N_{35}$ below 1.5.

4. Product according to any one of the preceding claims wherein the weight ratio in the fat-continuous phase between said one or more polyol fatty acid polyesters and said conventional glyceride fats lies within the range of from 30 : 70 and 60 : 40.

5. Product according to any one of the preceding claims wherein the solids contribution to the $N_5$ by said one or more polyol fatty acid polyesters is at least 70%.

6. Product according to any one of the preceding claims wherein said conventional glyceride fat is fully liquid at 5°C.

7. Product according to any one of the preceding claims which comprises a polyol fatty acid polyester having a slip melting point within the range of from 35 to 42°C.

8. Product according to any one of the preceding claims which is a spread having a fat content of 65 to 90% by weight of the total product.

9. Product according to any one of the preceding claims 1 to 8 which is a spread having a fat content of 35 to 65% by weight of the total product.

7

10. Product according to any one of the preceding claims 1 to 8 which is a spread having a fat content of 10 to 35% by weight of the total product.

## Patentansprüche

1. Eßbare, Fett enthaltende Zusammensetzung mit einer kontinuierlichen Fettphase, die einen oder mehrere unverdauliche Polyolfettsäurepolyester mit einem Steigschaelzpunkt innerhalb des Bereiches von 35 bis 50°C und übliche Glyceridfette in einem Gewichtsverhältnis innerhalb des Bereiches von 20 : 80 bis 90 : 10 umfaßt, worin die hontinuierliche Fettphase als Einzelstrom verarbeitet ist und ein Feststoffprofil von $N_5$ zwischen 10 und 30 und $N_{35}$ unter 2,5 aufweist, der Feststoffbeitrag eines oder mehrerer Polyolfettsäurepolyester(s) zum $N_5$-Wert im Bereich von 50 bis 100% liegt und der verdauliche Teil der Fettzusammensetzung höchstens 35% gesättigte Fettsäurereste umfaßt.

2. Zusammensetzung gemäß Anspruch 1, worin die kontinuierliche Fettphase ein solches Feststoffprofil hat, daß $N_{20}$ zwischen 6 und 15 liegt.

3. Zusammensetzung gemäß Anspruch 1 oder 2, worin die kontinuierliche Fettphase ein Feststoffprofil von $N_5$ zwischen 13 und 25, $N_{20}$ zwischen 8 und 13 und $N_{35}$ unter 1,5 hat.

4. Zusammensetzung gemäß irgendeinem der vorhergehenden Ansprüche, worin das Gewichtsverhältnis zwischen einem oder mehreren Polyolfettsäurepolyester(n) und den üblichen Glyceridfetten in der kontinuierlichen Fettphase im Bereich von 30 : 70 und 60 : 40 liegt.

5. Zusammensetzung gemäß irgendeinem der vorhergehenden Ansprüche, worin der durch einen oder mehrere Polyolfettsäurepolyester geleistete Feststoffbeitrag zum $N_5$-Wert mindestens 70% beträgt.

6. Zusammensetzung gemäß irgendeinem der vorhergehenden Ansprüche, worin das übliche Glyceridfett bei 5°C vollständig flüssig ist.

7. Zusammensetzung gemäß irgendeinem der vorhergehenden Ansprüche, die einen Polyolfettsäurepolyester mit einem Steigschmelzpunkt im Bereich von 35 bis 42°C umfaßt.

8. Zusammensetzung gemäß irgendeinem der vorhergehenden Ansprüche, die ein Aufstrich mit einem Fettgehalt von 65 bis 90 Gew.-% der gesamten Zusammensetzung ist.

9. Zusammensetzung gemäß irgendeinem der vorhergehenden Ansprüche 1 bis 8, die ein Aufstrich mit einem Fettgehalt von 35 bis 65 Gew.-% der gesamten Zusammensetzung ist.

10. Zusammensetzung gemäß irgendeinem der vorhergehenden Ansprüche 1 bis 8, die ein Aufstrich mit einem Fettgehalt von 10 bis 35 Gew.-% der gesamten Zusammensetzung ist.

## Revendications

1. Produit comestible contenant de la graisse et comportant une phase grasse continue qui comprend un ou plusieurs polyesters indigestes d'acides gras de polyols présentant un point de fusion de glissement compris entre 35 et 50°C et des graisses classiques de glycérides en un rapport pondéral compris entre 20 : 80 et 90: 10, dans lequel la phase contenant de la graisse est traitée en un seul courant et présente un profil de solides de $N_5$ compris entre 10 et 30 et de $N_{35}$ au dessous de 2,5, la contribution en matières solides au $N_5$ provenant desdits un ou plusieurs polyesters d'acides gras de polyols étant de 50 à 100% et la partie digeste de la composition de graisse comprenant au plus 35% de restes d'acides gras saturés.

2. Produit selon la revendication 1, dans lequel la phase grasse continue présente un profil de solides tels que $N_{20}$ soit entre 6 et 15.

3. Produit selon la revendication 1 ou 2, dans lequel la phase grasse continue présente un profil de solides $N_5$ entre 13 et 25, $N_{20}$ entre 8 et 13 et $N_{35}$ au dessous de 1,5.

4. Produit selon l'une quelconque des revendications précédentes, dans lequel le rapport pondéral dans la phase grasse continue du ou des polyesters d'acides gras de polyols auxdites graisses de glycérides classiques est compris entre 30 : 70 et 60 : 40.

5. Produit selon l'une quelconque des revendications précédentes, dans lequel la contribution en solides au $N_5$ par le ou les polyesters d'acides gras de polyols est d'au moins 70%.

6. Produit selon l'une quelconque des revendications précédentes, dans lequel ladite graisse de glycéride classique est entièrement liquide à 5°C.

7. Produit selon l'une quelconque des revendications précédentes, qui comprend un polyester d'acides gras de polyols ayant un point de fusion de glissement compris entre 35 et 42°C.

8. Produit selon l'une quelconque des revendications précédentes, qui est un produit à tartiner dont la teneur en graisses est comprise entre 65 et 90% en poids du produit total.

9. Produit selon l'une quelconque des revendications 1 à 8, qui est un produit à tartiner ayant une teneur en graisse de 35 à 65% en poids du produit total.

10. Produit selon l'une quelconque des revendications 1 à 8, qui est un produit à tartiner ayant une teneur en graisse de 10 à 35% en poids du produit total.